# EUROPEAN PATENT APPLICATION

(11) **EP 2 945 373 A1**
(43) Date of publication of application: **18.11.2015**
(21) Application number: 15020074.9
(22) Date of filing: 12.05.2015
(51) Int. Cl.: H04N 7/18, G08B 13/196

(54) **THE SECURITY SYSTEM OF OBJECTS**

(30) Priority: 16.05.2014 UA 2014005221
(71) Applicant: Khidirian Misak Ohanesovych, 01103 Kiew (UA)
(72) Inventor: Khidirian Misak Ohanesovych, 01103 Kiew (UA)
(74) Representative: Klemm, Rolf

(57) **Abstract**

The invention relates to security systems, such as systems that provide by the technical means obtaining, transfering, processing and presentation of images information signals on penetration or physical impact on secured objects of property (houses, apartments, villas, farms, garages, offices, warehouses, etc.) for users and also security agencies respond to such events. The proposed system of objects securitycontaining at least one device surveillance and / or DVR installed on the at least one protected object, which is configured to transfer CCTV data to server of system hardware and software complex and computerized devices of users with special software installed, and hardware and software system server contains interconnected registered users of the system database and security agencies involved in the system work database, the means of video surveillance and storing data in video archive database for each user of system, the means of displaying these data in user's computerized device. The hardware and software system server additionally secured by means of automatic analysis and processing CCTV regulated by predetermined algorithm designed to identify emergency related to the means of data transfer on computerized devices for remote users and panel control of security structure, and users' computerized devices are provided with a single interface that is configured by means of user connect to the personal cabinet after registration on the hardware and software system server, and the user or any other person has the opportunity to log in from a remote location via a communication channel and access to saved videos, or the current record of CCTV devices.

## Description

The invention relates to security systems, such as systems that provide by the technical means obtaining, transferring, processing and presentation of images, information, signals on penetration or physical impact on secured objects of property (houses, apartments, villas, farms, garages, offices, warehouses, etc.) for users and also security agencies respond to such events.

The known search system (Ukrainian patent number 86947, IPC G06F 17/30 publ. 01.10.2014, Bul.Nº 1), including communication means, and contains surveillance cameras directed to showing area and installed at items with the icon that demonstrate the ability to real-time view anywhere in the world, broadcast CCTV camera connected to the computer objects which are connected to the Internet through a hardware-software complex of central server connected via the Internet PC users for viewing users sites in real time. This system has limited functionality related to the fact that it only allows users to watch selected objects in real time.

Known security system of real estate and vehicles (Ukrainian patent number 54 827, IPC G08B 25/10, publ. 25.11.2010, Bul.Nº 22, 2010) containing at least one device for detecting penetration and at least one electronic device held by user, where a mobile phone with a video camera is used as a device for detecting penetration, or mobile phone and PC is used as an user's electronic device, all devices are connected to the Internet and equipped with special software from a remote server. The disadvantage of this system is that mobile phone usage for photo- or video recording. The phone can be discharged and also a camera integrated into the phone has a small surveillance radius of secured area, which can lead to the non-detection of another person's penetration, fire, any destruction etc.

Known technical security means of object (Ukrainian patent number 40 270, IPC G08B 25/00, G08B 26/00, publ. 25.03.2009, Bul.Nº 6, 2009.) containing sensor detection surveys devices, telephone exchange dispatch due to subscribers, hands-free system with loudspeakers, indicator boards, video surveillance system with video servers, video cameras and monitors, lighting system of secured area, processing system, display and archiving of audio and video, including two computers (duty operator and chief guard) united with all systems and devices and interconnected information network and software, system of primary and backup power, further equipped with a microprocessor controller, console of control and display and device of vigilance chat control, all of which connected by information network and software and with devices of polls sensor detection, processing system, display and archiving of audio and video data, indicator boards and telephone exchange dispatch communication, in addition hands-free system with loudspeakers and lighting system of secures area are connected to the control panel and display, Information network and software complex are completed suitable to receiving information about the status of the secured object by computers of duty operator and/or chief guard and microprocessor controller. The disadvantage of this system, reducing its effectiveness in responding to an event, is a need for constant user monitoring (duty operator and chief guard) of the display that at some point may result in operation failure (human factor).

Known CCTV (Ukrainian patent number 77 177, IPC G08B 26/00, publ. 01.25.2013, Bul.Nº 2), which includes digital and analog video cameras, video server, switch, comprising hardware and software systems located on remote distance and each containing external digital cameras, internal digital video cameras, which network connected to the switch through a local area, external analog camcorders, internal analog video cameras, connected to the DVR connected to the switch via a local computer network, which is also connected to video server for video recording and maintenance of video archive, and the hardware and software systems connected by a departmental communication network of monitoring center, which provides a central switch connected to a central video server, a computer connected to the monitor and the panel displaying video which is also connected to the computer.

Although this system allows to carry out full time video surveillance of certain objects, video, conducting the cyclic video archive and searching through it, but for watching video it is necessary to involve employees (i.e. there is a constant need to monitor the display), which may omit an important event and therefore not to react operatively to detected event. This technical solution is selected for the prototype.

The basis of the invention is the task of improving system of objects security, which through the use of new means and their functions provides the opportunity to get online remote video surveillance by all users of the secured facility, automatic analysis and processing of video surveillance in order to detect emergencies on the secured object, and the automatic transmission of data to user and security structures, leading to a significant reduction in the time required to respond to an emergency, reduction of the human factors impact and guaranteed response to unsolicited (extreme) events that occur with the object of the secured area.

The task is solved by the fact that the proposed system of objects security comprinsing at least one device surveillance and/or DVR installed on the at least one secured object, which is completed suitable to transfer CCTV data to server of hardware and software complex system and computerized users devices with special installed software , and hardware and software system server contains interconnected registered users of the system database and security agencies involved in the system work database, the means of video surveillance and storing data in video archive database for each user of system, the means of displaying these data in user's computerized device, where according to the invention hardware and software system server additionally secured by means of automatic analysis and processing CCTV governed by predetermined algorithm designed to identify emergency related to the means of data transfer on computerized devices for remote users and panel control of security structure, and users' computerized devices are provided with a single interface that is configured by means of user connect to the personal cabinet after registration on the hardware and software system server, and the user or any other person has the opportunity to log in from a remote location via a communication channel and access to saved videos, or the current record of CCTV devices.

Using in the proposed system of automatic analysis and processing CCTV governed by predetermined algorithm designed for an emergency situation detecting and leads to the absolute exclusion of operators (human factors) that prevents error when browsing and detecting, for example, malicious moves or other events in the area of cameras and / or video recorders.

Providing system with data transfer on computerized devices for remote users and security structure allows them to respond instantly to the extraordinary event that took place in the protected object.

Another advantage of this system is that the user or any other person has the opportunity to log in from a remote location via a communication channel and receive access to stored videos, or the current record of computerized devices.

This is rather essential point in cases such as when a user is not online (no Internet connection).

The invention is explained by drawings, where the proposed security system of facilities is schematically drawn.

The security system of objects (see. Fig.) contains at least one device CCTV 2 (video) and / or video recorder (DVR recorder with video camera) installed on the at least one protected object 1 (e.g, apartment, office).

These devices 2 executed suitable to transfer video surveillance data to the hardware and software system 4 server 3 via communication channels (Internet).

In addition, the system involves users who have special installed software on their computer devices (smartphones, tablets based on operating system Android or IOS, laptops, personal computers) namely the software GETISS, and who (users) were registered in the proposed system on a site that is integrated by system server 3.

Server 3 of hardware and software system 4 contains linked database of system registered users 6 and security agencies involved in the system work database 7. Any security system, for example, security agencies, fire services, utilities and others who participate in the system, provide their data to store in database of security structures 7. These data are: their address (location), phone (landline / mobile), E-mail, and others. This database 7 adapted to constant updating.

Also, the server 3 includes tools to make a video and save 8 data surveillance into video archive database 9 for each user, and means of the data displaying 10 on the user's computerized device 5 .

When registering users for involvement in the system, they need to fill in some standard fields on the system site type E-mail, password, etc.), and after registration user gets his own PIN to log into the personal account and access to videos stored in the video archive database 9 or current records of video surveillance devices. The user can provide another person with right to enter remote location system via a communication channel to watch his videos stored in the video archive database 9 or current records of video surveillance devices. This is a rather useful point in cases when the user is not online (no Internet connection), while the other person observes the secured object.

In addition, server 3 of the hardware and software system 4 additionally provided with automatic analysis and processing CCTV program 11 directed by predetermined algorithm designed to identify emergency and means of data transfer 12 on users' computerized devices 5 and on the control panel of security structure 13.

The invention is explained by a particular example of implementation of real estate system while protecting real estate (house).

To ensure the safety of the building the following steps are performed:
- to Establish video camera and / or video recorder 2 at secured object 1 and, where appropriate, the router;
- to Set up video cameras, and, if necessary, a router to work with the system;
- User registration in the system and installation the necessary software for user's computerized device 5. For example, a mobile phone based on operating system IOS or Android;
- to connect cameras to the facilities of the system;
- to regulate each of separate cameras 2 (sensitivity, motion detection, motion detection zones, message type, etc.).

After completing these steps, and switching-on of the security tools, all video streams from cameras 2 will be transmitted to the server 3 of hardware and software system 4 and stored in a video archives database 9 for certain user. Analysis and processing means 11 of video surveillance data in real-time trace events that are broadcasted by cameras 2. Finding out any movement in the area of the camcorder 2, the given means of data transfer 12 form the message and send it to the user device 5. The messages have a reference (date, time, etc.) to archive of the event and the user are able to link to a video of the event. To do this he should go to the system site or use a mobile application installed on a mobile phone based on operating system IOS or Android. Also, data package is sent to the control pane installed where the duty operator of security structure is located 13 from the server 3 by data transfer tools 12, and operator appropriately responds to this event, and as a consequence rapid response group of the security structure will come to the user's object 1 to eliminate extreme situation.

If at the moment of watching online video or the latest events archive or previous events archive the user sees that inside this object 1, where camera installed intruder penetrated or an event that threatens life or the possibility of property loss occurs, he can push the bottom of the security call, which is displayed on the interface device 5, enter a pin code, then with the device where bottom was clicked and the PIN code was entered, sent to the server 3 data packet, and from the server 3 sent the packet to the control panel installed where the duty operator of security structure is located 13 and operator appropriately responds to this event, and as a consequence the rapid response group of the security structure will come to the user's object 1 to eliminate extreme situation.

Also user is able view the online broadcast of video cameras with its PC via web-browser or mobile phone with an installed mobile application. Optionally the user is able to enter to the video archive system and choose a video, for example, the date / time on fixed motion, etc.

The proposed invention provides a significant reduction of time required to respond to emergencies, reduction of the human factors impact and ensure efficiency and effectiveness of responding to unsolicited (extreme) events that occur on the secured object.

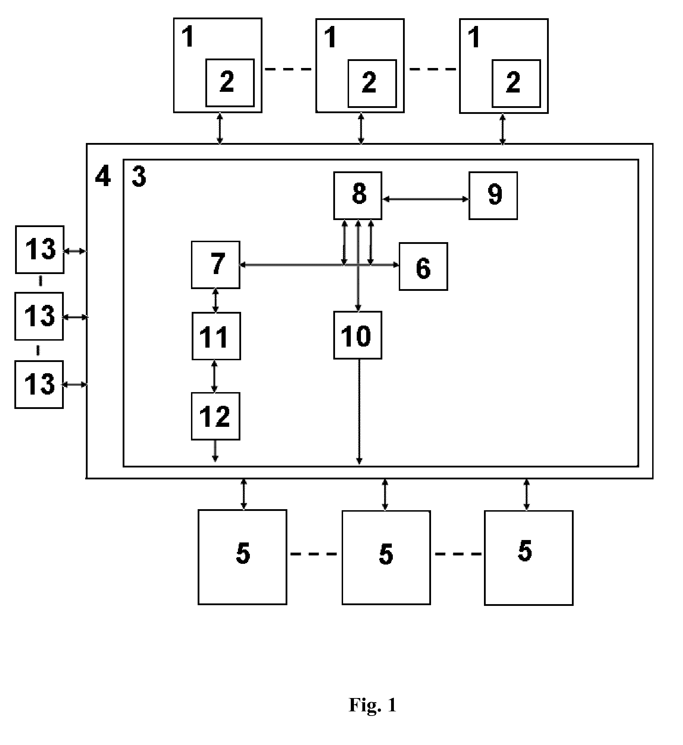

## Claims

1. The security system of objects comprising at least one device surveillance and / or DVR installed on at least one secured object, which is completed suitable to transfer to transfer CCTV data to server of hardware and software complex system and computerized devices of users with special software installed, and hardware and software system server contains interconnected registered users of the system database and security agencies involved in the system work database, the means of video surveillance and storing data in video archive database for each user of system, the means of displaying these data in user's computerized device, comprising that hardware and software system server additionally secured by means of automatic analysis and processing CCTV regulated by predetermined algorithm designed to identify emergency related to the means of data transfer on computerized devices for remote users and panel control of security structure, and users' computerized devices are provided with a single interface that is configured by means of user connect to the personal cabinet after registration on the hardware and software system server, and the user or any other person has the opportunity to log in from a remote location via a communication channel and access to stored videos, or the current record of CCTV devices.
